# EUROPEAN PATENT SPECIFICATION

(11) **EP 0 390 183 B1**
(45) Date of publication and mention of the grant of the patent: **17.07.1996**
(21) Application number: 90106144.0
(22) Date of filing: 30.03.1990
(51) Int. Cl.: H04N 5/08

(54) **Synchronizing signal separating circuit**
Synchronisationssignal-Abtrennschaltung
Circuit de séparation du signal de synchronisation

(30) Priority: 31.03.1989 JP 83129/89
(43) Date of publication of application: 03.10.1990
(73) Proprietor: SANYO ELECTRIC CO., LTD., Moriguchi-shi, Osaka (JP)
(72) Inventor: Hirao, Yoshichika, Neyagawa-shi, Osaka-fu (JP); Hosoya, Nobukazu, Ikoma-gun, Nara-ken (JP); Amino, Tadashi, Kobe-shi, Hyogo-ken (JP); Ishii, Takaaki, Higashiosaka-shi, Osaka-fu (JP)
(74) Representative: Glawe, Delfs, Moll & Partner

(56) References cited:
- DE-A- 3 444 764
- FR-A- 2 595 528
- PATENT ABSTRACTS OF JAPAN vol. 11, no. 7 (E-469)(2454) 09 January 1987, & JP-A- 61 184055 (MATSUSHITA ELECTRIC IND CO LTD) 16 August 1986,

## Description

### BACKGROUND OF THE INVENTION

### Field of the Invention

The present invention relates generally to synchronizing signal separating circuits, and more particularly, to a synchronizing signal separating circuit for separating a synchronizing signal from a composite video signal in a circuit of, for example, a chrominance signal processing system, a deflection system or the like in a video apparatus such as a television (TV) receiver, a video tape recorder (VTR) and a video disc player.

### Description of the Background Art

Conventionally, in a video apparatus such as a TV receiver, a VTR and a video disc player, for use in various operations a horizontal synchronizing signal and a vertical synchronizing signal are separated from an inputted or reproduced composite video signal and supplied to various circuits, such as a chrominance signal processing circuit and a deflection circuit in the video apparatus.

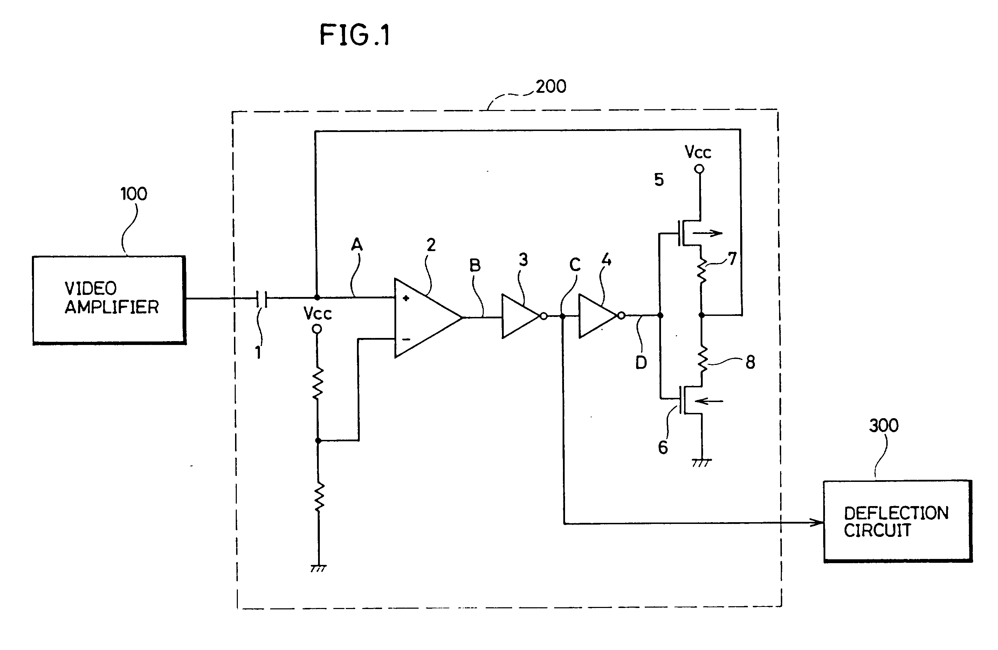

Fig. 1 is a circuit diagram showing one example of such a conventional synchronizing signal separating circuit, in case it is applied, for example, to a TV receiver. More specifically, a composite video signal received by an antennae and a video receiving circuit which are not shown is amplified in a video amplifying circuit 100 and then, supplied to a synchronizing signal separating circuit 200. The synchronizing signal separating circuit 200 extracts a horizontal synchronizing signal and a vertical synchronizing signal from the applied composite video signal and outputs the same as a composite synchronizing signal. The composite synchronizing signal outputted from the synchronizing signal separating circuit 200 is supplied, for example, to a deflection circuit 300, wherein the signal is further separated into a horizontal synchronizing signal and a vertical synchronizing signal for use in a deflecting operation.

Described in more detail on the synchronizing signal separating circuit 200 of Fig. 1, an output of the video amplifying circuit 100 is supplied to a positive input of a comparator 2 through a coupling condenser 1. In addition, a reference voltage of e.g. 2.5V is applied to a negative input of the comparator 2. An output of the comparator 2, after being inverted by an inverter 3, is supplied as a composite synchronizing signal to a deflection circuit 300, and also it is further inverted by an inverter 4 and then supplied to gates of a p-channel MOSFET 5 and an n-channel MOSFET 6. These MOSFETs and bias resistors 7 and 8 are connected in series between a power supply potential Vcc and a ground potential, and a node of the resistors 7 and 8 is further connected to the positive input of the comparator 2.

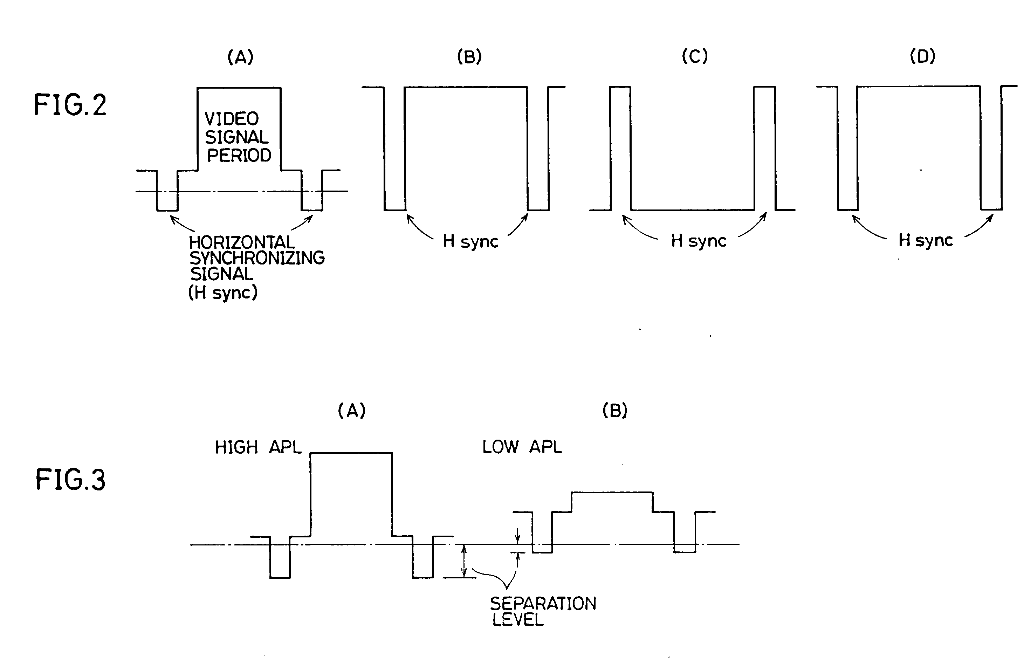

Now, Fig. 2 is a waveform diagram for explaining an operation of the synchronizing signal separating circuit 100 shown in Fig. 1, wherein Figs. 2 (A) (B), (C) and (D) show signal waveforms approximately in one horizontal period at the corresponding nodes A, B, C and D in the circuit of Fig. 1.

First, when a composite video signal shown in Fig. 2 (A) is applied to the positive input of the comparator 2 through the coupling condenser 1, the comparator 2 compares the composite video signal with the reference potential applied to the negative input (a dashed line of Fig. 2 (A)) and amplifies the result, and outputs a horizontal synchronizing signal of a negative polarity as shown in Fig. 2 (B) to supply the same to the inverter 3. The horizontal synchronizing signal inverted by the inverter 3 becomes a signal of a positive polarity as shown in Fig. 2 (C), and is supplied to the deflection circuit 300 in the succeeding stage and also supplied to the inverter 4 wherein it is further inverted. The inverter 4 outputs a horizontal synchronizing signal of the negative polarity as shown in Fig. 2 (D) and supplies the same to the gates of the p channel MOSFET 5 and n channel MOSFET 6.

As a result, in a horizontal synchronizing signal period of Fig. 2 (D), the p channel MOSFET 5 is turned on and the n channel MOSFET 6 is turned off, so that the coupling condenser 1 is charged with the electric charges from the power supply Vcc through the bias resistor 7, and in the period except the horizontal synchronizing signal period, the p channel MOSFET 5 is turned off and the n channel MOSFET 6 is turned on, so that the electric charges stored in the coupling condenser 1 are discharged through the bias resistor 8. A ratio of a length of a horizontal synchronizing signal period to a length of the other period in one horizontal period is defined as about 1:12, and corresponding thereto, a ratio of a resistance value of the bias resistor 7 to that of the bias resistor 8 is set at about 12:1. As a result, the amount of electric charges to be charged in the coupling condenser 1 and that of electric charges to be discharged therefrom become equal, whereby a horizontal synchronizing signal is correctly separated.

The destination of thus separated horizontal synchronizing signal (Fig. 2 (C)) is not limited to the deflection circuit 300 shown in Fig. 1, but it can be supplied to any circuit requiring a synchronizing signal such as a chrominance signal processing circuit in the video apparatus. In addition, while the inverters 3 and 4 are provided in case a horizontal synchronizing signal to be required is of the positive polarity, in case such a horizontal synchronizing signal of the negative polarity as shown in Fig. 2 (B) is required, they are not necessary, and it may be constituted so as to supply the output of the comparator 2 as a horizontal synchronizing signal. In addition, while the foregoing description is on the operation in case the horizontal synchronizing signal is separated in a manner as shown in Fig. 2, since a vertical synchronizing signal is comprised of a plurality of pulses each having the above described time ratio of 1:12, it can be separated in the circuit of Fig. 1 similarly to the horizontal synchronizing signal.

As the foregoing, the synchronizing signal separating circuit using MOSFETs is disclosed in, for example, Japanese Patent Laying Open Nos. JP-A-56 80965, JP-A-58 60880 and JP-A-61 198977.

In the conventional synchronizing signal separating circuit shown in Fig. 1 and known from JP-A-61 184055, the coupling condenser 1 is charged with a fixed amount of electric charges from the power supply Vcc through the bias resistor 7 in the synchronizing signal period. When there exist a very bright portion and a very dark portion in a picture frame, an average picture level (APL) of a video signal becomes significantly different in each horizontal period in some cases. For example, Fig. 3 (A) indicates that one horizontal line includes a lot of white portions to cause the APL to become high and Fig. (B) indicates that one horizontal line includes a lot of black portions to cause the APL to become low. Accordingly, if the coupling condenser 1 is always charged with a fixed amount of electric charges with respect to video signals in horizontal periods in which the APLs thereof are different, a signal level supplied to the positive input of the comparator 1 falls or rises with respect to a fixed separation level (dashed line of Fig. 3) supplied to the negative input of the comparator 2. As a result, when the separation. level becomes contiguous to a lower end or an upper end of a synchronizing signal, noise, a burst signal or the like on the video signal is erroneously detected as a synchronizing signal in some cases and then outputted, so that various processings using a synchronizing signal can not be performed normally.

DE-A-34 44764 discloses a synchronizing signal separator comprising a coupling capacitor, an inverting amplifier and a limiter. The output of the amplifier is coupled to the inverting input of the amplifier via the parallel connection of a resistor and a reversely biased diode.

### SUMMARY OF THE INVENTION

Therefore, an object of the present invention is to provide a synchronizing signal separating circuit capable of correctly separating a synchronizing signal from a composite video signal.

Another object of the present invention is to provide a synchronizing signal separating circuit which does not erroneously detect noise, a burst signal or the like in a composite video signal as a synchronizing signal.

A further object of the present invention is to provide a synchronizing signal separating circuit capable of maintaining a difference in level between a top level of a synchronizing signal and a separation level to be constant, irrespective of an APL of an inputted video signal.

These objects are met by the synchronizing signal separating circuits specified in claims 1, 2 and 3.

Therefore, a principal advantage of the present invention is that even if a composite video signal having a different APL is inputted, a level difference between a top level of a synchronizing signal and a separation level does not change, whereby the synchronizing signal can be correctly separated.

The foregoing and other objects, features, aspects and advantages of the present invention will become more apparent from the following detailed description of the present invention when taken in conjunction with the accompanying drawings.

### BRIEF DESCRIPTION OF THE DRAWINGS

Fig. 1 is a circuit diagram showing one example of a conventional synchronizing signal separating circuit.

Figs. 2 and 3 are timing charts for explaining an operation of the synchronizing signal separating circuit shown in Fig. 1.

Fig. 4 is a circuit diagram showing a synchronizing signal separating circuit according to a first embodiment of the present invention.

Figs. 5 and 6 are timing charts for explaining an operation of the embodiment shown in Fig. 4.

Fig. 7 is a circuit diagram showing a synchronizing signal separating circuit according to a second embodiment of the present invention.

Fig. 8 is a timing chart for explaining an operation of the embodiment shown in Fig. 7.

Fig. 9 is a circuit diagram showing a synchronizing signal separating circuit according to a third embodiment of the present invention.

Fig. 10 is a schematic block diagram showing a horizontal AFC circuit.

Figs. 11, 12 and 13 are timing charts for explaining an operation of the embodiment shown in Fig. 9.

Figs. 14 and 15 are circuit diagrams showing modified examples of the embodiment shown in Fig. 4.

### DESCRIPTION OF THE PREFERRED EMBODIMENTS

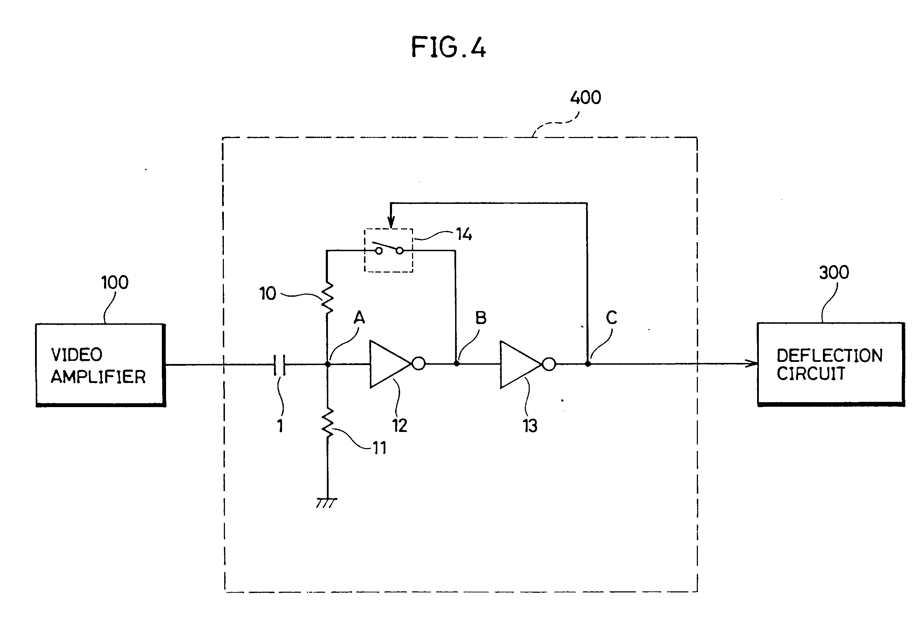

Fig. 4 is the circuit diagram showing the synchronizing signal separating circuit according to the first embodiment of the present invention. Referring to Fig. 4, an output of a video amplifying circuit 100 is supplied to a synchronizing signal separating circuit 400, wherein it is supplied to an input of an inverter 12 through a coupling condenser 1. An output of the inverter 12 is supplied to an input of an inverter 13 and also supplied to an input node A of the inverter 12 through a switch 14 and a bias resistor 10 connected in series. The input node A is grounded through a bias resistor 11. An output of the inverter 13 is supplied as a composite synchronizing signal to a deflection circuit 300 and also supplied as a control signal to the switch 14 to control the switching of the switch 14.

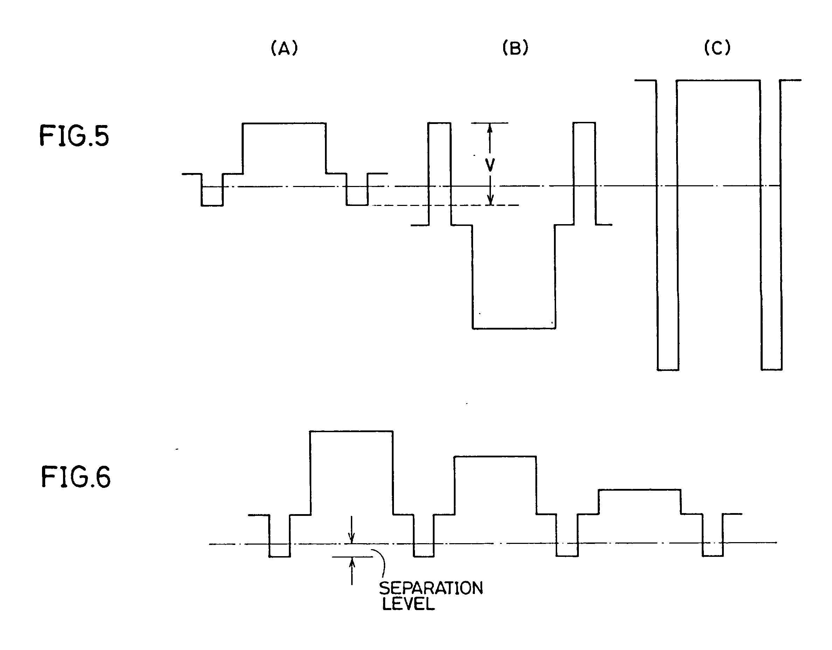

Fig. 5 is the waveform diagram for explaining an operation of the synchronizing signal separating circuit 400 shown in Fig. 4, wherein Figs. 5 (A), (B) and (C) show signal waveforms approximately in one horizontal period at the corresponding nodes A, B and C in the circuit of Fig. 4, respectively. A dashed line in Fig. 5 indicates a threshold level of the inverters 12 and 13.

First, when the composite video signal shown in Fig. 5 (A) is supplied to the input of the inverter 12 through the coupling condenser 1, the inverter 12 inverts and amplifies the composite video signal to output such a signal as shown in Fig. 5 (B) and then supplies the signal to the input of the inverter 13 and also to the input node A of the inverter 12 through the switch 14 and the bias resistor 10. The inverter 13 inverts and amplifies the supplied signal to output such a horizontal synchronizing signal of a negative polarity as shown in Fig. 5 (C) and then supplies the same to the deflection circuit 300. Namely, the inverter 13 functions as a limiter. The horizontal synchronizing signal outputted from the inverter 13 is supplied also to the control input of the switch 14.

The switch 14 is constituted so as to be turned on while a control signal is at an "L" level and turned off while it is at an "H" level. Accordingly, in a horizontal synchronizing signal period (during an "L" level period of Fig. 5 (C)) the switch 14 is turned on, so that the coupling condenser 1 is charged with the amount of electric charges corresponding to a voltage indicated by V in Fig. 5 (B) through the bias resistor 10. On the other hand, in other period ("H" level period of Fig. 5 (C)) than the horizontal synchronizing signal period, the switch 14 is turned off, so that the electric charges stored in the coupling condenser 1 are discharged through the bias resistor 11.

As the foregoing, if it is constituted such that the coupling condenser 1 is charged with the amount of electric charges corresponding to the voltage V shown in Fig. 5 (B), when a composite video signal having an APL fluctuating in each horizontal period as shown in Fig. 6 is inputted, although the inputted signal level fluctuates with respect to the threshold level as described in the foregoing, the voltage V also fluctuates correspondingly. For example, if the separation level becomes contiguous to the lower end of the horizontal synchronizing signal, the voltage V becomes small and the amount of electric charges to be charged decreases, so that the separation level is shifted upward. On the contrary, if the separation level becomes contiguous to the upper end of the horizontal synchronizing signal, the voltage V becomes large and the amount of the electric charges to be charged increases, so that the separation level is shifted downward. Namely, since a direct current bias at the node A fluctuates in each horizontal period, even if the composite video signal having an APL fluctuating in each period as shown in Fig. 6 is inputted, a level difference between a top level of the horizontal synchronizing signal and a separation level, that is, a threshold level of the inverter is maintained to be constant. As a result, in the synchronizing signal separating circuit of Fig. 4, it is not possible that a separation level becomes contiguous to a lower end or an upper end of a synchronizing signal, so that no noise or a burst signal is erroneously detected as the synchronizing signal, as is the case with the conventional synchronizing signal separating circuit of Fig. 1.

In the embodiment of the Fig. 4, the larger a ratio of a resistance value of the bias resistor 11 to a resistance value of the bias resistor 10 becomes, the more separation sensitivity of the synchronizing signal separating circuit is improved. Namely, the resistance value of the bias resistor 11 larger than that of the bias resistor 10 causes the separation level to near the lower end of the synchronizing signal. As a result, separation of the synchronizing signal becomes less susceptible to the video signal, thereby the separation sensitivity is improved. However, it is important not to allow the separation level to near the lower end too much because the separation of the synchronizing signal is affected by noise included in a horizontal synchronization period in a weak electric field. In addition, increased gain of the inverter 12 causes the voltage V to be increased, whereby the amount of electric charge to be charged is also increased. This also enables the separation level to near the lower end of the synchronizing signal to improve the separation sensitivity.

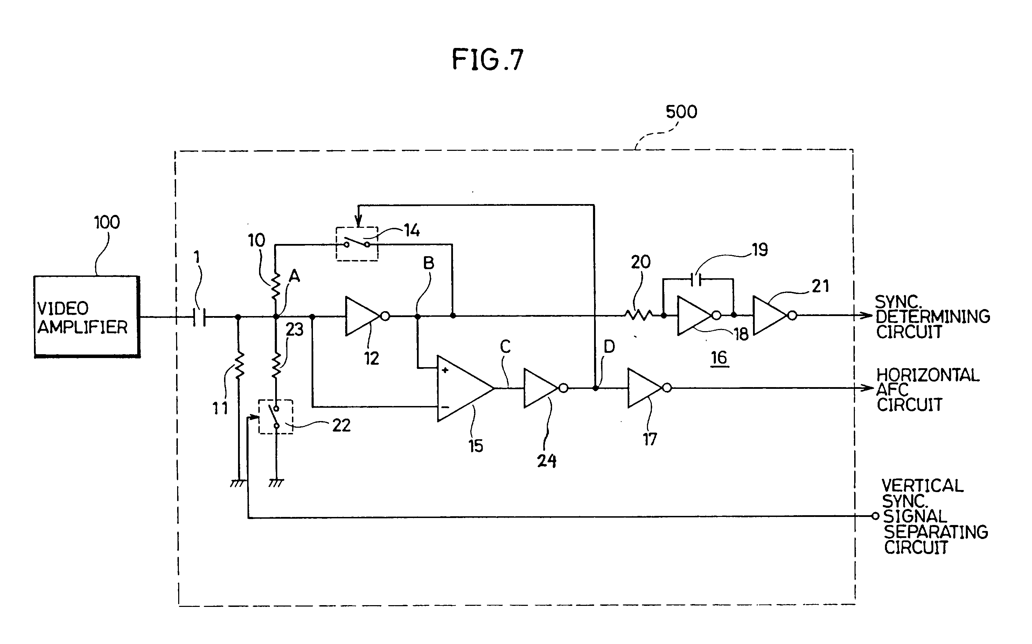

Fig. 7 is the circuit diagram showing the synchronizing signal separating circuit according to the second embodiment of the present invention. A basic configuration of a synchronizing signal separating circuit 500 shown in Fig. 7 is the same as that of the synchronizing signal separating circuit 400 according to the first embodiment shown in Fig. 4 except for the following points. Namely, a comparator 15 is provided in place of the inverter 13, for comparing the output and the input of the inverter 12, the output of the inverter 12 is taken out through separately provided low pass filter (LPF) 16 and inverter 21, and series-connected bias resistor 23 and switch 22 are provided between the node A and the ground, in parallel with the bias resistor 11. The above described LPF 16 is comprised of an inverter 18, a condenser 19 and a resistor 20 and has an output supplied to a synchronization determining circuit (not shown) through the inverter 21. In addition, the output of the inverter 17 is supplied to a horizontal automatic frequency control (AFC) circuit for use as a chrominance signal processing circuit or the like. Switching of the switch 22 is controlled by a vertical equalizing pulse extracted in a vertical synchronizing signal separating circuit (not shown) provided in a stage subsequent to, for example, this synchronizing signal separating circuit. The inverters 24 and 17 may be suitably provided as required in order to obtain the synchronizing signal of the desired polarity.

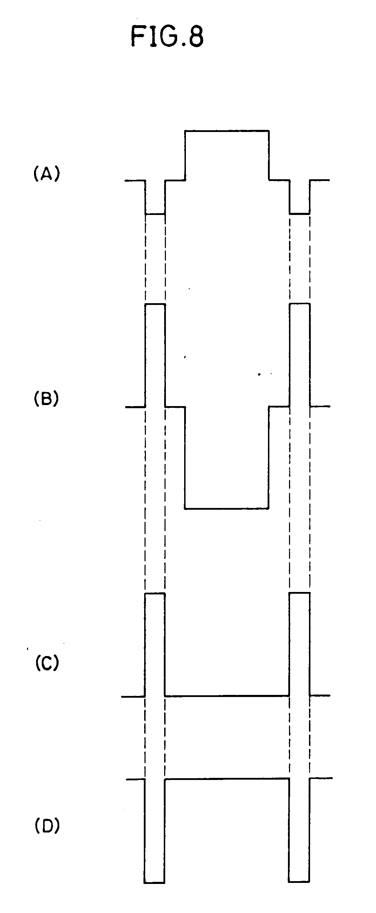

Fig. 8 is a waveform diagram for explaining an operation of the synchronizing signal separating circuit 500 shown in Fig. 7, wherein Figs. 8 (A), (B), (C) and (D) show signal waveforms approximately in one horizontal period at the corresponding nodes A, B, C and D in the circuit of Fig. 7, respectively.

First, when a composite video signal shown in Fig. 8 (A) is supplied to the input of the inverter 12 through the coupling condenser 1, the inverter 12 inverts and amplifies the signal to output such a signal as shown in Fig. 8 (B) and then supplies the signal to a positive input of the comparator 15 and also to the input node A of the inverter 12 through the switch 14 and the bias resistor 10. In addition, the output of the inverter 12 is supplied also to the inverter 21 through the LPF 16. On the other hand, the signal of the node A (Fig. 8 (A)) is supplied to a negative input of the comparator 15, so that the comparator 15 outputs a horizontal synchronizing signal of the positive polarity shown in Fig. 8 (C) to the node C. The output of the comparator 15 is inverted and amplified by the inverter 13 to become such a horizontal synchronizing signal of the negative polarity as shown in Fig. 8 (D) and then the signal is supplied to the control input of the switch 14 and also to, for example, a horizontal AFC circuit (not shown) through the inverter 17. On this occasion, the switch 14 is a switch which is turned on during the control signal is at the "L" level and turned off during it is at the "H" level, as described above. Accordingly, in the horizontal synchronizing signal period (in the "L" level period of Fig. 8 (D)) the switch 14 is turned on, so that the coupling condenser 1 is charged by a potential of the node B through the bias resistor 10, and in other period than the horizontal synchronizing signal period (in the "H" level period of Fig. 8 (D)) the switch 14 is turned off, so that the charges stored in the coupling condenser 1 are discharged through the bias resistor 11. As a result, in the synchronizing signal separating circuit shown in Fig. 7, similarly to the synchronizing signal separating circuit shown in Fig. 4, the direct current bias at the node A fluctuates in each horizontal period in response to an APL in the horizontal period, so that the level difference between the top level of the horizontal synchronizing signal and the separation level is always maintained to be constant, thereby making a correct separation of the synchronizing signal possible.

In addition, the output of the inverter 12 (Fig. 8 (B)) is separately detected as a horizontal synchronizing signal through the LPF 16 and the inverter 21 functioning as a limiter and supplied to, for example, a synchronization determining circuit. Such provision of LPF 16 between the inverters 12 and 21 is intended for the improvement of separation sensitivity in a weak electric field. More specifically, generally in the weak electric field, a synchronizing signal is covered with noise, and consequently if the synchronizing signal including such noise is directly supplied to a synchronization determining circuit in a succeeding stage, synchronization is erroneously determined to cause malfunction of a video apparatus. Therefore, by interposing such LPF 16 between the inverters 12 and 21, noise component is removed to prevent the malfunction in the weak electric field.

Furthermore, in the embodiment of Fig. 7, in a vertical blanking period, the switch 22 is turned on by the vertical equalizing pulses extracted in the vertical synchronization separating circuit (not shown) in the succeeding stage. As a result, while the separation level goes away from the top level of the synchronizing signal to improve the separation sensitivity, there is no possibility of erroneous separation of the synchronization signal because no video signal exists in the vertical blanking period.

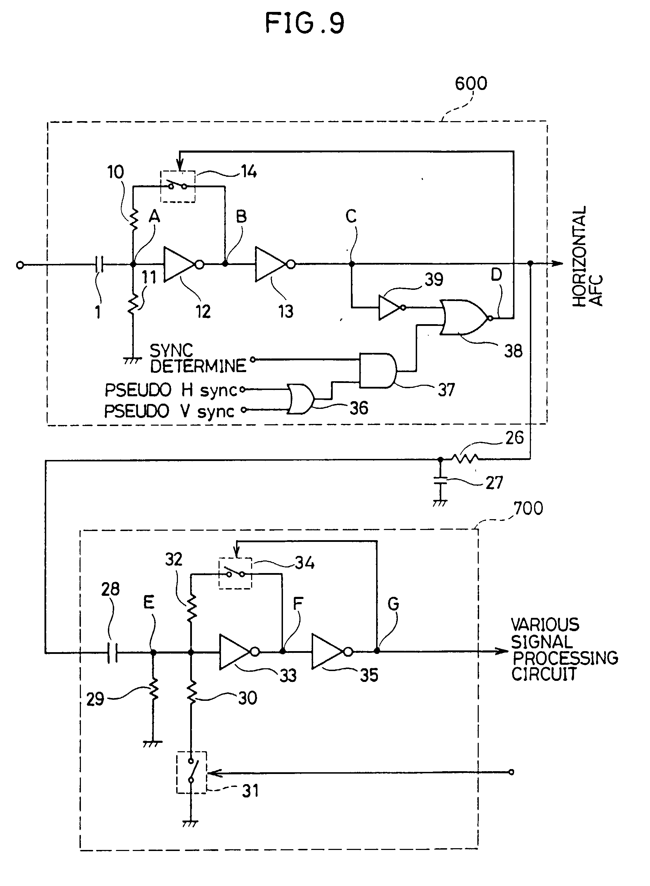

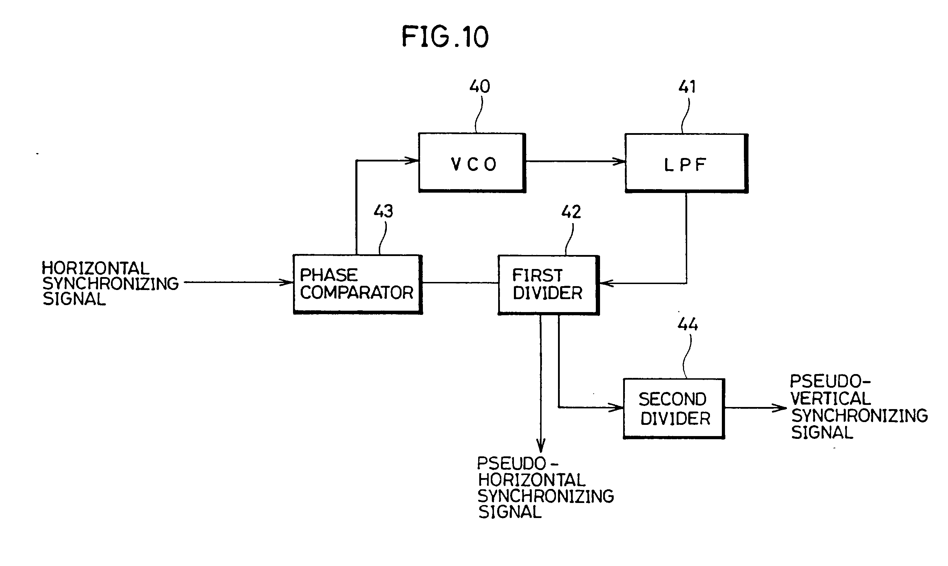

Fig. 9 is a circuit diagram showing a synchronizing signal separating circuit according to a third embodiment of the present invention. Roughly stated, the embodiment shown in Fig. 9 comprises a first synchronizing signal separating circuit 600 for receiving a composite video signal to separate a composite synchronizing signal including a horizontal synchronizing signal and a vertical synchronizing signal, and a second synchronizing signal separating circuit 700 for receiving the composite synchronizing signal to separate only the vertical synchronizing signal. The first and the second synchronizing signal separating circuits 600 and 700 have the same structure as that of the synchronizing signal separating circuit 400 according to the first embodiment shown in Fig. 4 except for the following points. Namely, the first synchronizing signal separating circuit 600 is provided with an OR gate 36 for receiving a pseudo-horizontal synchronizing signal and a pseudo-vertical synchronizing signal, an AND gate 37 for receiving an output of the OR gate 36 and a synchronizing determining signal, an inverter 39 for inverting the output of the inverter 13, and an NOR gate 38 for receiving an output of the AND gate 37 and an output of the inverter 39, wherein an output of the NOR gate 38 is supplied as a control input to the switch 14. The above described synchronization determining signal is a signal supplied from a synchronization determining circuit (not shown), which attains the "H" level in the synchronization period and attains the "L" in the non-synchronization period. In addition, the pseudo-horizontal synchronizing signal and the pseudo-vertical synchronizing signal are obtained by frequency-dividing an oscillating output of a voltage controlled oscillator (VCO) in a horizontal AFC circuit, and the pseudo-horizontal synchronizing signal is a signal attaining the "H" level during a period having a length approximately equal to that of the horizontal synchronization period and the pseudo-vertical synchronizing signal is that attaining the "H" level during a period having a length approximately equal to that of the vertical synchronization period. Fig. 10 is a block diagram showing such horizontal AFC circuit. Referring to Fig. 10, a VCO 40, an LPF 41, a first frequency divider 42 and a phase comparator circuit 43 constitute an AFC loop, wherein an oscillating output of the VCO 40 oscillating at a frequency of a predetermined multiple of a horizontal frequency f_{H} is frequency-divided by a predetermined frequency-dividing ratio in the first frequency divider 42 through the LPF 41 and then supplied to one input of the phase comparator circuit 43. A horizontal synchronizing signal separated by the synchronizing separating circuit 600 of Fig. 9 is supplied to the other input of the phase comparator circuit 43, wherein phases of both signals are compared. Then, the phase comparator circuit 43 outputs an error output and supply the same to the VCO 40 to adjust an oscillating period of the VCO, such that the horizontal synchronizing signal and the oscillating output of the VCO 40 have a predetermined phase relation. Now, an output of the first frequency divider 42 is taken out as a pseudo-horizontal synchronizing signal and supplied to the OR gate 36 of Fig. 9, and also supplied to the second frequency divider 44, which divider 44 frequency-divides the supplied pseudo-horizontal synchronizing signal to generate a pseudo-vertical synchronizing signal and supplies the same to the OR gate 36 of Fig. 9.

Now, back to the description of the first synchronizing signal separating circuit 600 of Fig. 9, the output of the inverter 13 is taken out as a composite synchronizing signal including a horizontal synchronizing signal and a vertical synchronizing signal and then supplied to the horizontal AFC circuit of Fig. 10, and also integrated by a LPF comprising a resistor 26 and a condenser 27 and then supplied to the second synchronizing signal separating circuit 700.

While the second synchronizing signal separating circuit 700 basically has the same structure as that of the synchronizing signal separating circuit 400 of Fig. 4, it is provided with series-connected bias resistor 30 and switch 31 arranged between an input node of an inverter 33 and a ground potential, in parallel with a bias resistor 29, similarly to the synchronizing signal separating circuit 500 of Fig. 7. Similar to the embodiment of Fig. 7, switching of the switch 31 is controlled by vertical equalizing pulses. An output of the inverter 35 is supplied as a vertical synchronizing signal to various signal processing systems.

Now, described is a reason for the provision of the OR gate 36, the AND gate 37, the inverter 39 and the NOR gate 38 in the first synchronizing signal separating circuit 600 of Fig. 9.

In the first and the second embodiments shown in Figs. 4 and 7, as described above, even if a APL of a composite video signal fluctuates in each horizontal period, it is possible to correctly separate a synchronizing signal. However, since discharging of the coupling condenser 1 is performed in other period than a synchronizing signal period, in case the APL abruptly changes during the period, a composite video signal having different APL is inputted before the coupling condenser 1 is completely discharged, so that a top level of the synchronizing signal fluctuates with respect to the separation level, whereby it becomes impossible to separate the synchronizing signal correctly. The first synchronizing signal separating circuit 600 of Fig. 9 is made for resolving such problems, which is capable of correctly separating the synchronizing signal even if an APL fluctuates abruptly.

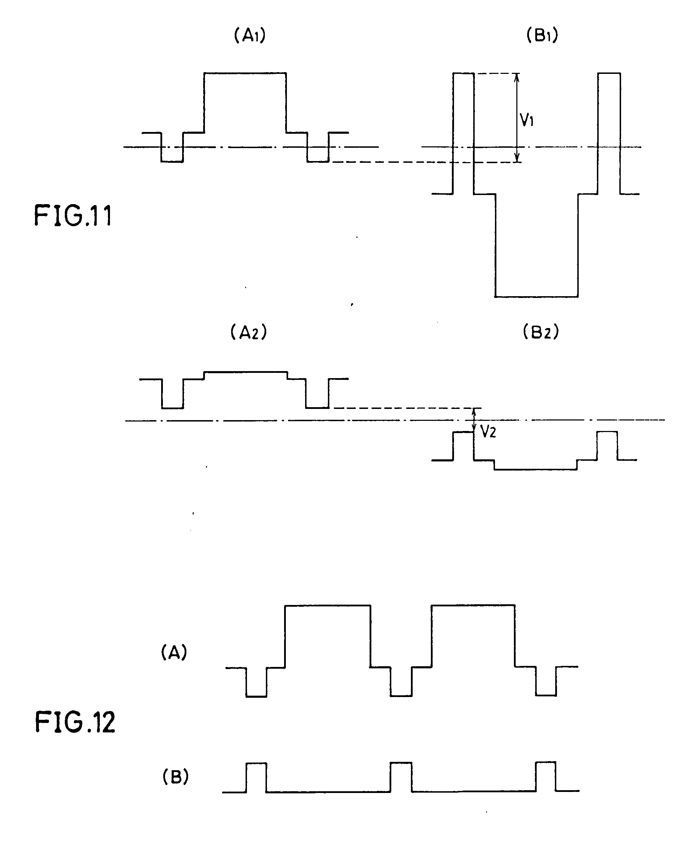

Fig. 11 is a waveform diagram for explaining an operation of the first synchronizing signal separating circuit 600 of Fig. 9, wherein Figs. 11 (A₁) and (A₂) show signal waveforms at the node A and Figs. 11 (B₁) and (B₂) show signal waveforms at the node B. First, when a composite video signal shown in Fig. 11 (A₁) is supplied to the input of the inverter 12 through the coupling condenser 1, the inverter 12 inverts and amplifies the signal to output a signal shown in Fig. 11 (B₁) and then supplies the same to the input of the inverter 13, and also supplies to the input node A of the inverter 12 through the switch 14 and the bias resistor 10. Similarly to the embodiments of Figs. 4 and 7, in the synchronizing signal period, the switch 14 is turned on, so that the coupling condenser 1 is charged with the amount of the electric charges corresponding to a voltage V₁ of Fig. 11 (B₁).

Now, consider a case wherein a composite video signal having an APL approximate to 100% is suddenly changed into a composite video signal having an APL approximate to 0%, a composite video signal in the subsequent horizontal period is inputted to the coupling condenser 1 before the electric charges stored in the coupling condenser 1 are fully discharged, so that the potential at the node A becomes as shown in Fig. 11 (A₂), and consequently the separation level (indicated by a dashed line) lowers than the lower end of the synchronizing signal. If such a signal is inverted and amplified by the inverter 12, the potential at the node B becomes as shown in Fig. 11 (B₂), whereby no synchronizing signal is separated.

In the embodiment shown in Fig. 9, by employing a signal obtained by NOR processing the pseudo-synchronizing signal generated based on the above described oscillating output of the VCO of Fig. 9 and the inverted output of the inverter 13 as a control signal of the switch 14, the switch 14 is turned on in a period which has a length approximately equal to that of the original synchronizing signal period even if no synchronizing signal is outputted from the inverter 13.

More specifically, on the contrary, when the switch 14 is turned on by the pseudo-horizontal synchronizing signal in a state shown in Figs. 11 (A₂) and (B₂), the amount of electric charges corresponding to the voltage V₂ are discharged from the coupling condenser 1. Since the resistance value of the bias resistor 10 is smaller than that of the bias resistor 11, this discharging is performed rapidly, so that a relation between the separation level and the top level of the horizontal synchronizing signal is restored to a normal relation. As a result, separation of the horizontal synchronizing signal is correctly performed. Fig. 12 is a timing chart showing a relation between the original composite video signal (A) and the pseudo-horizontal synchronizing signal (B).

Furthermore, since in the first synchronizing signal separating circuit 600 of Fig. 9 the pseudo-vertical synchronizing signal is also NOR-processed with the inverted output of the inverter 13 and supplied to the switch 14 as a control input, the switch 14 is turned on during a period having a length approximately equal to that of the original vertical synchronizing signal period, so that the coupling condenser 1 is discharged to maintain the relation between the separation level and the top level of the synchronizing signal to be constant even in case a vertical synchronizing signal in a composite video signal largely fluctuates due to, for example, AG characteristics of a tuner, abnormal electric wave or the like. Namely, also with respect to the vertical synchronizing signal, a perfect separation of the synchronization can be performed similarly to the above described horizontal synchronizing signal. Then, the output of the inverter 13 is supplied as a composite synchronizing signal to the above described horizontal AFC circuit and also integrated by the LPF comprising the resistor 26 and the condenser 27 and then supplied to the second synchronizing signal separating circuit 700.

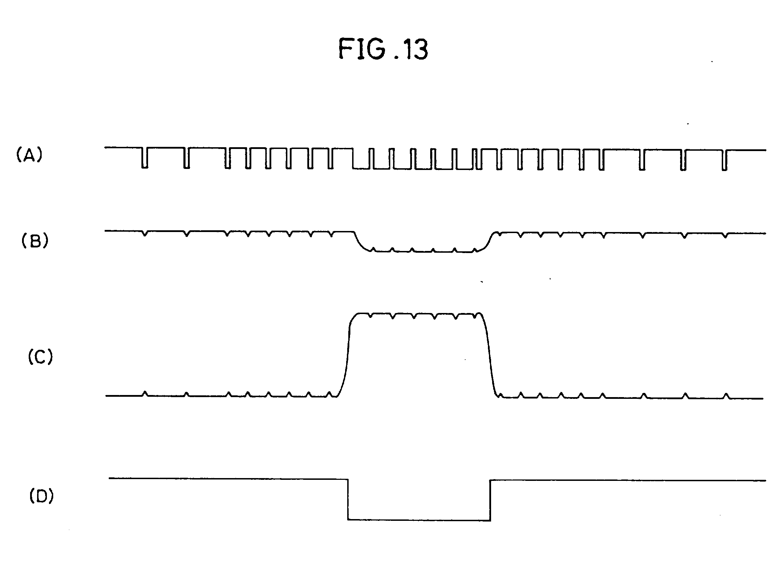

Fig. 13 is a timing chart for explaining an operation of the second synchronizing signal separating circuit 700 of Fig. 9, wherein Fig. 13 (A) shows a signal waveform at the point C of Fig. 9, that is, a composite synchronizing signal comprising a horizontal synchronizing signal and a vertical synchronizing signal separated by the first synchronizing signal separating circuit 600. Such a composite synchronizing signal passes through the LPF comprising the resistor 26 and the condenser 27 to become a signal of such waveform as shown in Fig. 13 (B) at the point E of Fig. 9. This signal is inverted and amplified by the inverter 33 to becomes a signal of such waveform as shown in Fig. 13 (C) at the point F of Fig. 9. The signal is further inverted and amplified by the inverter 35, and at the point G of Fig. 9, only a vertical synchronizing signal is separated therefrom as shown in Fig. 13 (D) and which is supplied to the various circuits (not shown).

In addition, in the second synchronizing signal separating circuit 700 of Fig. 9, similarly to the embodiment of Fig. 7, in the vertical synchronizing signal period, the switches 31 is turned on in response to vertical equalizing pulses, and the bias resistor 30 is connected between the node E and the ground. As a result, in the vertical synchronizing signal period, the separation level rises with respect to the top level of the vertical synchronizing signal of Fig. 13 (B), so that the influence of the small pulses included in the top level can be eliminated, whereby separation sensitivity during the vertical synchronizing signal period can be improved.

## Claims

1. A synchronizing signal separating circuit for separating, from an input signal including at least a synchronizing signal, said synchronizing signal, comprising:
coupling capacitance means (28) for receiving said input signal,
first inverting and amplifying means (33) for inverting and amplifying said input signal received through said coupling capacitance means,
first limiter means (35) for limiting the amplitude of the output signal of said first inverting and amplifying means to supply said output signal having its amplitude limited as said synchronizing signal,
**characterized** by
first bias means (32) for connecting the output node (F) to an input node (E) of said first inverting and amplifying means for charging said coupling capacitance means with the output signal of said first inverting and amplifying means,
first switching means (34) provided between the output node of said first inverting and amplifying means and said first bias means and being controlled so as to be turned on in said synchronizing signal period in response to the output signal of said first limiter means,
second bias means (29) connected between the input node of said first inverting and amplifying means and a fixed reference potential for discharging electric charges of said coupling capacitance means, and
third bias means (30) and second switching means (31) connected in series between said input node (E) and the reference potential, in parallel with said second bias means (29), a switching of said second switching means being controlled so as to be turned on in the vertical synchronizing signal period.

2. A synchronizing signal separating circuit for separating, from an input signal including at least a synchronizing signal, said synchronizing signal, comprising:
coupling capacitance means (1) for receiving said input signal,
first inverting and amplifying means (12) for inverting and amplifying said input signal received through said coupling capacitance means,
**characterized** by comparing means (15) for comparing input and output signals of said first inverting and amplifying means to supply the result of comparison as said synchronizing signal,
first bias means (10) for connecting the output node (B) to an input node (A) of said first inverting and amplifying means for charging said coupling capacitance means with the output signal of said first inverting and amplifying means,
first switching means (14) provided between the output node of said first inverting and amplifying means and said first bias means and being controlled so as to be turned on in said synchronizing signal period in response to the output signal of said comparing means,
second bias means (11) connected between the input node of said first inverting and amplifying means and a fixed reference potential for discharging electric charges of said coupling capacitance means, and
third bias means (23) and second switching means (22) connected in series between said input node and said reference potential, in parallel with said second bias means (11), said second switching means being controlled so as to be turned on in the vertical synchronizing signal period.

3. Synchronizing signal separating system comprising a first (600) and a second (700) synchronizing signal separating circuit each including
coupling capacitance means (1, 28) for receiving an input signal,
first inverting and amplifying means (12, 33) for inverting and amplifying said input signal received through said coupling capacitance means (1, 28),
first limiter means (13, 35) for limiting the amplitude of the output signal of said first inverting and amplifying means (12, 33) to supply said output signal having its amplitude limited as said synchronizing signal,
**characterized** in that
said first and second synchronizing signal separating circuits further comprise first bias means (10, 32) for connecting respective output nodes (B, F) to respective input nodes (A, E) of the respective first inverting and amplifying means (12, 33) for charging said respective coupling capacitance means (1, 28) with the output signal of said respective first inverting and amplifying means (12, 33),
first switching means (14, 34) provided between the output nodes of said first inverting and amplifying means and said first bias means and being controlled so as to be turned on in said synchronizing signal period in response to the output signal of said respective first limiter means,
second bias means (11, 29) connected between the respective input nodes (A, E) of said first inverting and amplifying means (12, 33) and fixed reference potentials for discharging electric charges of said respective coupling capacitance means (1, 28)
wherein said first synchronizing signal separating circuit (600) further includes an OR-gate (36) for receiving a pseudo-horizontal synchronizing signal and a pseudo-vertical synchronizing signal, an AND-gate (37) for receiving an output of said OR-gate (36) and a synchronizing determining signal, a second inverting and amplifying means (39) for inverting the output of said first limiter means (13) and a NOR-gate (38) for receiving the output of said AND-gate (37) and the output of the second inverting and amplifying means (39), wherein the output of said NOR-gate is supplied as control input of said first switching means (14),
said second synchronizing signal separating circuit (700) further includes said bias means (30) and second switching means (31) connected in series between said input node (E) and the reference potential, in parallel with said second bias means (29), a switching of said second switching means being controlled so as to be turned on in the vertical synchronizing signal period,
wherein the first synchronizing signal separating circuit (600) receives a composite video signal to separate a composite synchronizing signal including a horizontal synchronizing signal and a vertical synchronizing signal;
and wherein the second synchronizing signal separating circuit (700) receives a composite synchronizing signal, separated from the composite video signal by said first synchronizing signal separating circuit (600), to separate only the vertical synchronizing signal.

4. A synchronizing signal separating circuit according to claim 1 or 2, wherein said input signal is a composite video signal including horizontal and vertical synchronizing signals and a video signal, and said synchronizing signal supplied by said first limiter means is a composite synchronizing signal including horizontal and vertical synchronizing signals.

5. A synchronizing signal separating circuit according to claim 4, wherein said first limiter means includes second inverting and amplifying means (13) for further inverting and amplifying the output signal of said first inverting and amplifying means to supply the inverted and amplified signal as said composite synchronizing signal,
wherein switching of said first switching means is controlled by the output signal of said second inverting and amplifying means.

6. A synchronizing signal separating circuit according to claim 4, which further comprises:
means (36, 37) for generating a pseudo-horizontal synchronizing signal and a pseudo-vertical synchronizing signal having lengths approximately equal to said horizontal and vertical synchronizing signals, respectively,
means (38) for supplying said pseudo-horizontal synchronizing signal or said pseudo-vertical synchronizing signal as a control input of said first switching means, when said horizontal or vertical synchronizing signal is not supplied from said first limiter means.

7. A synchronizing signal separating circuit according to claim 1 or 2, wherein said input signal is a composite synchronizing signal including horzontal and vertical synchronizing signals, and said synchronizing signal supplied by said first limiter means is a vertical synchronizing signal.

8. A synchronizing signal separating circuit according to claim 7, wherein said first limiter means includes third inverting and amplifying means (35) for further inverting and amplifying the output signal of said first inverting and amplifying means to supply the inverted and amplified signal as said vertical synchronizing signal,
wherein switching of said first switching means is controlled by the output signal of said third inverting and amplifying means.

9. A synchronizing signal separating circuit according to claim 7, further comprising means (26, 27) for integrating said input composite synchronizing signal and supplying said integrated signal to said coupling capacitance means.

10. A synchronizing signal separating circuit according to claim 2, which further comprises low-pass filter means (16) for cutting off a high frequency component of the output signal of said first inverting and amplifying means, and first limiter means (21) for limiting an amplitude of an output signal of said low-pass filter means to supply said output signal having its amplitude limited as said synchonizing signal.

## Patentansprüche

1. Synchronisiersignal-Abtrennschaltung zum Abtrennen eines Synchronisiersignals aus einem Eingabesignal, das wenigstens das Synchronisiersignal enthält, mit:
einem koppelnden kapazitiven Element (28) zum Empfang des Eingabesignals,
einem ersten Inverter- und Verstärkermittel (33) zum Invertieren und Verstärken des durch das koppelnde kapazitive Element empfangenen Eingabesignals,
einem ersten Begrenzermittel (35) zur Begrenzung der Amplitude des Ausgabesignals des ersten Inverter- und Verstärkermittels, um das Ausgabesignal mit einer begrenzten Amplitude als Synchronisiersignal zuzuführen,
**gekennzeichnet** durch
ein erstes Vorspannmittel (32), um den Ausgabeknoten (F) des ersten Inverter- und Verstärkermittels mit einem Eingabeknoten (E) zu verbinden, um das koppelnde kapazitive Element mit dem Ausgabesignal des ersten Inverter- und Verstärkermittels zu laden,
einem ersten Schaltmittel (34), das zwischen dem Ausgabeknoten des ersten Inverter- und Verstärkermittels und dem ersten Vorspannmittel vorgesehen ist und so gesteuert wird, daß es in in dem Synchronisiersignal-Zeitabschnitt in Abhängigkeit des Ausgabesignals des ersten Begrenzermittels angeschaltet wird,
einem zweiten Vorspannmittel (29), das zwischen dem Eingabeknoten des ersten Inverter- und Verstärkermittels und einer festen Bezugsspannung geschaltet ist, um elektrische Ladungen aus dem koppelnden kapazitiven Element zu entladen, und
einem dritten Vorspannmittel (30) und einem zweiten Schaltmittel (31), die in Reihe zwischen dem Eingabeknoten (I) und der Bezugsspannung, parallel zu dem zweiten Vorspannmittel (29) geschaltet sind, wobei ein Schalten des zweiten Schaltmittels so gesteuert wird, daß es im Vertikal-Synchronisiersignal-Abschnitt angeschaltet wird.

2. Synchronisiersignal-Abtrennschaltung zum Abtrennen eines Synchronisiersignals aus einem Eingabesignal, das wenigstens das Synchronisiersignal enthält, mit:
einem koppelnden kapazitiven Element (1) zum Empfang des Eingabesignals,
einem ersten Inverter- und Verstärkermittel (12) zum Invertieren und Verstärken des durch das koppelnde kapazitive Element empfangene Eingabesignal,
**gekennzeichnet** durch
ein Vergleichermittel (15) zum Vergleich der Eingabe- und Ausgabesignale des ersten Inverter- und Verstärkermittels, um das Vergleichsergebnis als das Synchronisiersignal zuzuführen,
einem ersten Vorspannmittel (10), um den Ausgabeknoten (B) des ersten Inverter- und Verstärkermittels mit einem Eingabeknoten (A) zu verbinden, um das koppelnde kapazitive Element mit dem Ausgabesignal des ersten Inverter- und Verstärkermittels zu laden,
einem ersten Schaltmittel (14), das zwischen dem Ausgabeknoten des ersten Inverter- und Verstärkermittels und dem ersten Vorspannmittel vorgesehen ist und so gesteuert wird, daß es in dem Synchronisiersignal-Zeitabschnitt in Abhängigkeit des Ausgabesignals des Vergleichermittels angeschaltet wird,
einem zweiten Vorspannmittel (11), das zwischen dem Eingabeknoten des ersten Inverter- und Verstärkermittels und einer festen Bezugsspannung geschaltet ist, um die elektrischen Ladungen aus dem koppelnden kapazitiven Element zu entladen,
einem dritten Vorspannmittel (23) und einem zweiten Schaltmittel (22), die in Reihe zwischen dem Eingabeknoten und der Bezugsspannung, parallel zu dem zweiten Vorspannmittel (11) geschaltet sind, wobei das zweite Schaltmittel (22) so gesteuert wird, daß es in dem Vertikal-Synchronisiersignal-Abschnitt angeschaltet wird.

3. Synchronisiersignal-Abtrennsystem mit
ersten (600) und zweiten (700) Synchronisiersignal-Abtrennschaltungen, die jeweils enthalten:
ein koppelndes kapazitives Element (28) zum Empfang eines Eingabesignals,
ein erstes Inverter- und Verstärkermittel (12, 33) zum Invertieren und Verstärken des Eingabesignals, das durch das koppelnde kapazitive Element (1, 28) empfangen wird,
ein erstes Begrenzermittel (13, 35) zum Begrenzen der Amplitude des Ausgabesignals des ersten Inverter- und Verstärkermittels (12, 33), um das Ausgabesignal mit begrenzter Amplitude als Synchronisiersignal zuzuführen,
dadurch **gekennzeichnet**, daß
die ersten und zweiten Synchronisiersignal-Abtrennschaltungen außerdem umfassen:
erste Vorspannmittel (10, 32), um jeweilige Ausgangsknoten (B, F) der jeweiligen ersten Inverter- und Verstärkermittel (12, 33) mit jeweiligen Eingabeknoten (A, E) zu verbinden, um die jeweiligen koppelnden kapazitiven Elemente (1, 28) mit den Ausgabesignalen der jeweiligen ersten Inverter- und Verstärkermittel (12, 33) zu laden,
erste Schaltmittel (14, 34), die zwischen den Ausgabeknoten und der ersten Inverter- und Verstärkermittel und den ersten Vorspannmitteln vorgesehen sind und so gesteuert werden, daß sie in dem Synchronisiersignal-Zeitabschnitt in Abhängigkeit des Ausgabesignals der jeweiligen ersten Begrenzermittel angeschaltet werden,
zweite Vorspannmittel (11, 29), die zwischen den jeweiligen Eingabeknoten (A, E) der ersten Inverter- und Verstärkermittel (12, 33) und festen Bezugsspannungen geschaltet sind, um elektrische Ladungen der jeweiligen koppelnden kapazitiven Elemente (11, 28) zu entladen,
wobei die erste Synchronisiersignal-Abtrennschaltung (600) außerdem enthält:
ein OR-Gate (36) zum Empfang eines Pseudo-Horizontal-Synchronisiersignals und eines Pseudo-Vertikal-Synchronisiersignals, ein AND-Gate (37) zum Empfang einer Ausgabe des OR-Gates (36) und eines Synchronisier-Bestimmungssignals,
ein zweites Inverter- und Verstärkermittel (39) zum Invertieren der Ausgabe des ersten Begrenzermittels (13) und ein NOR-Gate (38) zum Empfang der Ausgabe des AND-Gates (37) und der Ausgabe des zweiten Inverter- und Verstärkermittels (39), wobei die Ausgabe des NOR-Gates als Steuersignal an das erste Schaltmittel (14) angelegt wird,
wobei die zweite Synchronisiersignal-Abtrennschaltung (700) außerdem das Vorspannmittel (30) und das zweite Schaltmittel (31) enthält, die in Reihe zwischen dem Eingabeknoten (I) und der Bezugsspannung, parallel zu dem zweiten Vorspannmittel (29) geschaltet sind, wobei ein Schalten des zweiten Schaltmittels so gesteuert wird, daß es in einem Vertikal-Synchronisiersignal-Abschnitt angeschaltet wird,
wobei die erste Synchronisiersignal-Abtrennschaltung (600) ein zusammengesetztes Videosignal empfängt, um ein zusammengesetztes Synchronisiersignal abzutrennen, das ein Horizontal-Synchronisiersignal und ein Vertikal-Synchronisiersignal enthält, und wobei die zweite Synchronisiersignal-Abtrennschaltung (700) ein zusammengesetztes Synchronisiersignal empfängt, das von dem zusammengesetzten Videosignal durch die erste Synchronisiersignal-Abtrennschaltung (600) abgetrennt wurde, um nur das Vertikal-Synchronisiersignal abzutrennen.

4. Synchronisiersignal-Abtrennschaltung nach Anspruch 1 oder 2,
bei der das Eingabesignal ein zusammengesetztes Videosignal ist, das die Horizontal- und Vertikal-Synchronisiersignale und ein Videosignal enthält, wobei das Synchronisiersignal, das durch das erste Begrenzermittel zugeführt wird, ein zusammengesetztes Synchronisiersignal ist, das die Horizontal- und Vertikal-Synchronisiersignale enthält.

5. Synchronisiersignal-Abtrennschaltung nach Anspruch 4,
bei der das erste Begrenzermittel zweite Inverter- und Verstärkermittel (13) enthält, um zusätzlich das Ausgabesignal des ersten Inverter- und Verstärkermittels zu invertieren und zu verstärken, um das invertierte und verstärkte Signal als zusammengesetztes Synchronisiersignal zuzuführen, wobei das Schalten des ersten Schaltmittels durch das Ausgabesignal des zweiten Inverter- und Verstärkermittels gesteuert wird.

6. Synchronisiersignal-Abtrennschaltung nach Anspruch 4, die außerdem aufweist:
Mittel (36,37) zur Erzeugung eines Pseudo-Horizontal-Synchronisiersignals und eines Pseudo-Vertikal-Synchronisiersignals, die etwa gleich lang wie die Horizontal- und Vertikal-Synchronisiersignale sind,
Mittel (38) zum Zuführen des Pseudo-Horizontal-Synchronisiersignals oder des Pseudo-Vertikal-Synchronisiersignals als eine Steuereingabe des ersten Schaltmittels, wenn das Horizontal- oder Vertikal-Synchronisiersignal nicht vom ersten Begrenzermittel zugeführt wird.

7. Synchronisiersignal-Abtrennschaltung nach Anspruch 1 oder 2,
bei der das Eingabesignal ein zusammengesetztes Synchronisiersignal ist, das Horizontal- und Vertikal-Synchronisiersignale enthält, und wobei das Synchronisiersignal, das vom ersten Begrenzermittel zugeführt wird, ein Vertikal-Synchronisiersignal ist.

8. Synchronisiersignal-Abtrennschaltung nach Anspruch 7,
bei der das erste Begrenzermittel ein drittes Inverter- und Verstärkermittel (35) enthält, um zusätzlich das Ausgabesignal der ersten Inverter- und Verstärkermittel zu invertieren und zu verstärken, um das invertierte und verstärkte Signal als Vertikal-Synchronisiersignal zuzuführen, wobei das Umschalten des ersten Schaltmittels durch das Ausgabesignal der dritten Inverter- und Verstärkermittel gesteuert wird.

9. Synchronisiersignal-Abtrennschaltung nach Anspruch 7, die außerdem umfaßt:
Mittel (26, 27) zum Integrieren des zusammengesetzten Eingabe-Synchronisiersignals und um das integrierte Signal an das koppelnde kapazitive Element anzulegen.

10. Synchronisiersignal-Abtrennschaltung nach Anspruch 2, die außerdem ein Tiefpaßfiltermittel (16) zum Abschneiden einer Hochfrequenzkomponente des Ausgabesignals des ersten Inverter- und Verstärkermittels und erste Begrenzermittel (21) zum Begrenzen einer Amplitude eines Ausgabesignals des Tiefpaßfiltermittels umfaßt, um das Ausgabesignal mit begrenzter Amplitude als Synchronisiersignal zuzuführen.

## Revendications

1. Circuit de séparation d'un signal de synchronisation pour séparer, à partir d'un signal d'entrée comprenant au moins un signal de synchronisation, ledit signal de synchronisation, comprenant :
un moyen capacitif de couplage (28) pour recevoir ledit signal d'entrée,
un premier moyen d'inversion et d'amplification (33) pour inverser et amplifier ledit signal d'entrée reçu au travers dudit moyen capacitif de couplage,
un premier moyen limiteur (35) pour limiter l'amplitude du signal de sortie dudit premier moyen d'inversion et d'amplification pour fournir ledit signal de sortie ayant son amplitude limitée comme ledit signal de synchronisation,
caractérisé en ce que
un premier moyen de polarisation (32) pour connecter le noeud de sortie (F) à un noeud d'entrée (E) dudit premier moyen d'inversion et d'amplification pour charger ledit moyen capacitif de couplage avec le signal de sortie dudit premier moyen d'inversion et d'amplification,
un premier moyen de commutation (34) prévu entre le noeud de sortie dudit premier moyen d'inversion et d'amplification et ledit premier moyen de polarisation et étant commandé de manière à être passant durant ladite période du signal de synchronisation en réponse au signal de sortie dudit premier moyen limiteur,
un second moyen de polarisation (29) connecté entre le noeud d'entrée dudit premier moyen d'inversion et d'amplification et un potentiel de référence fixe pour décharger les charges électriques dudit moyen capacitif de couplage, et
un troisième moyen de polarisation (30) et un second moyen de commutation (31) connectés en série entre eux ledit noeud d'entrée (E) et le potentiel de référence, en parallèle avec ledit second moyen de polarisation (29), l'ouverture dudit second moyen de commutation étant commandé de manière à être passant durant la période du signal de synchronisation verticale.

2. Circuit de séparation d'un signal de synchronisation pour séparer, à partir d'un signal d'entrée comprenant au moins un signal de synchronisation, ledit signal de synchronisation, comprenant :
un moyen capacitif de couplage (1) pour recevoir ledit signal d'entrée,
un premier moyen d'inversion et d'amplification (12) pour inverser et amplifier ledit signal d'entrée reçu au travers dudit moyen capacitif de couplage,
caractérisé en ce que
un moyen de comparaison (15) pour comparer les signaux d'entrée et sortie dudit premier moyen d'inversion et d'amplification pour fournir le résultat de la comparaison comme signal de synchronisation,
un premier moyen de polarisation (10) connectant le noeud de sortie (B) au noeud d'entrée (A) dudit premier moyen d'inversion et d'amplification pour charger ledit moyen capacitif de couplage avec le signal de sortie dudit premier moyen d'inversion et d'amplification, un premier moyen de commutation (14) prévu entre le noeud de sortie dudit premier moyen d'inversion et d'amplification et ledit premier moyen de polarisation, commandé de manière à être fermé durant la période dudit signal de synchronisation en réponse au signal de sortie dudit moyen de comparaison,
un second moyen de polarisation (11) connecté entre le noeud d'entrée dudit premier moyen d'inversion et d'amplification et un potentiel de référence fixe pour décharger les charges électriques dudit moyen capacitif de couplage, et
un troisième moyen de polarisation (23) et un second moyen de commutation (22) connecté en série entre ledit noeud d'entrée et ledit potentiel de référence, en parallèle avec ledit second moyen de polarisation (11), ledit second moyen de commutation étant commandé de manière à être passant durant la période du signal de synchronisation verticale.

3. Système de séparation d'un signal de synchronisation comprenant un premier et un second circuit de séparation d'un signal de synchronisation (600) et (700) comprenant :
des moyens capacitifs de couplage (1, 28) pour recevoir un signal d'entrée,
des premiers moyens d'inversion et d'amplification (12, 33) pour inverser et amplifier ledit signal d'entrée reçu au travers desdits moyens capacitifs de couplage (1, 28),
des premiers moyens limiteurs (13, 35) pour limiter l'amplitude du signal de sortie desdits premiers moyens d'inversion et d'amplification (12, 33) pour fournir ledit signal de sortie ayant son amplitude limitée à celle dudit signal de synchronisation,
caractérisé en ce que
ledit premier et second circuit de séparation du signal de synchronisation comprennent d'autre part des premiers moyens de polarisation (10, 32) pour connecter respectivement les noeuds de sortie (B, F) aux noeuds d'entrée respectifs (A, E) des premiers moyens d'inversion et d'amplification respectifs (12, 33) pour charger lesdits moyens capacitifs de couplage respectifs (1, 28) avec le signal de sortie desdits premiers moyens d'inversion d'amplification respectifs (12, 33),
des premiers moyens de commutation (14, 34) prévus entre les noeuds de sortie desdits premiers moyens d'inversion et d'amplification et lesdits premiers moyens de polarisation, commandés de manière à être passants durant la période dudit signal de synchronisation en réponse au signal de sortie desdits respectifs premiers moyens limiteurs,
des seconds moyens de polarisation (11, 29) connectés entre les noeuds d'entrée respectifs (A, E) desdits premiers moyens d'inversion et d'amplification (12, 33) et des potentiels de référence fixes pour décharger des charges électriques desdits respectifs moyens capacitifs de couplage (1, 28),
dans lequel ledit premier circuit de séparation du signal de synchronisation (600) comporte d'autre part une porte OR (36) pour recevoir un pseudo signal de synchronisation horizontale et un pseudo signal de synchronisation verticale, et une porte AND (37) pour recevoir une sortie de ladite porte OR (36) et un signal de détermination de synchronisation, un second moyen d'inversion et d'amplification (39) pour inverser la sortie dudit premier moyen limiteur (13) et une porte NOR (38) pour recevoir la sortie de ladite porte AND (37) et la sortie du second moyen d'inversion et d'amplification (39), où la sortie de ladite porte NOR est fournie comme entrée de commande audit premier moyen de commutation (14),
ledit second circuit de séparation du signal de synchronisation (700) comprend d'autre part un dit moyen de polarisation (30) et un second moyen de commutation (31) connecté en série entre ledit noeud d'entrée (E) et le potentiel de référence, en parallèle avec ledit second moyen de polarisation (29), l'état dudit second moyen de commutation étant commandé de manière à être passant durant la période du signal de synchronisation verticale,
dans lequel le premier circuit de séparation du signal de synchronisation (600) reçoit un signal vidéo composite pour séparer un signal de synchronisation composite comprenant un signal de synchronisation horizontale et un signal de synchronisation verticale,
et dans lequel le second circuit de séparation du signal de synchronisation (700) reçoit un signal de synchronisation composite, séparé du signal vidéo composite par ledit premier circuit de séparation du signal de synchronisation (600) pour séparer seulement le signal de synchronisation verticale.

4. Circuit de séparation d'un signal de synchronisation selon l'une des revendications 1 ou 2, dans lequel ledit signal d'entrée est un signal vidéo composite comprenant des signaux de synchronisation horizontale et verticale et un signal vidéo, et ledit signal de synchronisation fourni par ledit premier moyen limiteur est un signal de synchronisation composite comprenant des signaux de synchronisation horizontale et verticale.

5. Circuit de séparation d'un signal de synchronisation selon la revendication 4, dans lequel ledit premier moyen limiteur comprend un second moyen d'amplification et d'inversion (13) pour ensuite inverser et amplifier le signal de sortie dudit premier moyen d'inversion et d'amplification pour fournir le signal amplifié et inversé comme dit signal de synchronisation composite,
dans lequel l'état passant ou non-passant dudit premier moyen de commutation est contrôlé par le signal de sortie dudit second moyen d'inversion et d'amplification.

6. Circuit de séparation d'un signal de synchronisation selon la revendication 4, qui comprend d'autre part :
des moyens (36, 37) pour générer un pseudo signal de synchronisation horizontale et un pseudo signal de synchronisation verticale de longueurs approximativement égales aux signaux respectivement de synchronisation horizontale et verticale,
un moyen (38) pour fournir ledit pseudo signal de synchronisation horizontale ou ledit pseudo signal de synchronisation verticale comme commande d'entrée dudit premier moyen de commutation, lorsque ledit signal de synchronisation horizontale ou verticale n'est pas fourni à partir dudit premier moyen limiteur.

7. Circuit de séparation d'un signal de synchronisation selon la revendication 1 ou 2, dans lequel ledit signal d'entrée est un signal de synchronisation composite comprenant des signaux de synchronisation horizontale et verticale, et ledit signal de synchronisation fourni par ledit premier moyen limiteur est un signal de synchronisation verticale.

8. Circuit de séparation d'un signal de synchronisation selon la revendication 7, dans lequel ledit premier moyen limiteur comprend un troisième moyen d'inversion et d'amplification (35) pour ensuite inverser et amplifier le signal de sortie dudit premier moyen d'inversion et d'amplification pour fournir le signal inversé et amplifié comme signal de synchronisation verticale, où l'état passant ou non passant dudit premier moyen de commutation est contrôlée par le signal de sortie dudit troisième moyen d'inversion et d'amplification.

9. Circuit de séparation d'un signal de synchronisation selon la revendication 7, comprenant d'autre part des moyens (26, 27) pour intégrer ledit signal de synchronisation composite d'entrée et fournir ledit signal intégré audit moyen capacitif de couplage.

10. Circuit de séparation d'un signal de synchronisation selon la revendication 2, qui comprend d'autre part un moyen filtre passe-bas (16) pour couper une composante haute fréquence du signal de sortie dudit premier moyen d'inversion et d'amplification, et un premier moyen limiteur (21) pour limiter une amplitude d'un signal de sortie dudit moyen de filtre passe-bas pour fournir ledit signal de sortie ayant son amplitude limitée audit signal de synchronisation.
